# EUROPEAN PATENT APPLICATION

(11) **EP 1 311 098 A2**
(43) Date of publication of application: **14.05.2003**
(21) Application number: 02025067.6
(22) Date of filing: 12.11.2002
(51) Int. Cl.: H04L 29/06

(54) **Service information providing system, service information providing method, and control station**

(30) Priority: 13.11.2001 JP 2001347875
(71) Applicant: NTT DoCoMo, Inc., Tokyo 100-6150 (JP)
(72) Inventor: Kawaguchi, Fumiko, Intellectual Property Dept., 2-11-1, Nagatacho, Chiyoda-ku, Tokyo (JP); Tosaki, Takashi, Intellectual Property Dept., 2-11-1, Nagatacho, Chiyoda-ku, Tokyo (JP); Sugiyama, Takeshi, Intellectual Property Dept., 2-11-1, Nagatacho, Chiyoda-ku, Tokyo (JP); Kaiyama, Akira, Intellectual Property Dept., 2-11-1, Nagatacho, Chiyoda-ku, Tokyo (JP); Oosaki, Kenji, Intellectual Property Dept., 2-11-1, Nagatacho, Chiyoda-ku, Tokyo (JP)
(74) Representative: HOFFMANN - EITLE

(57) **Abstract**

A service information providing system includes an attribute information storer (71) configured to store an attribute information reference table in which information specifying each user and attribute information showing attributes of the user correspond with each other; a service storer (72) configured to store a service reference table in which information specifying each service, information specifying a detailed service, and the attribute information of user are associated with each other; a receiver configured to receive information specifying the user and a request for a given service; a service decider (75) configured to determine the attribute information of the user, by referring the information specifying the user and the attribute information reference table, and to select a given detailed service based on the attribute information of the user and the request for the given service by referring to the service reference table; and a provider (95) configured to provide the communication instrument of the user with the given detailed service information selected by the service selector.

## Description

### CROSS REFERENCE TO RELATED APPLICATIONS

This application is based upon and claims the benefit of priority from the prior Japanese Patent Application No. P2001-347875, filed on Nov. 13, 2001; the entire contents of which are incorporated herein by reference.

### BACKGROUND OF THE INVENTION

### 1. Field of the Invention

The present invention relates to a service information providing system, a service information providing method and a control station, which provide communication instruments by means of which a user of a communication line can access information concerning services.

### 2. Description of the Related Art

Conventionally, a user using a communication line (such as a communication network) would obtain service information according to a method described below. The user inputs information necessary for requesting a service into a communication terminal device while referring to brochures or various instruction manuals, for example. The inputted information is transmitted to a given server device. The given server device provides the service information to the communication terminal device of the user.

The user can also obtain service information according to a method described below. Information indicating procedures necessary for using a service is retained in the communication terminal device of the user. The user inputs information necessary for requesting the service into the communication terminal device, while referring to the information.

Then, the communication terminal device accesses the server device. The server device transmits the service information (and/or) detailed service information to the communication terminal device. The detailed service information includes more detailed information than the information contained in the service information. The communication terminal device displays the service information or the detailed service information. In this way, the user can obtain service information (and/or) detailed service information.

However, such prior art has the following problem. As described above, conventionally, it may be the case that detailed service information is provided to the user. In such a case, for example, the user would be provided with all the detailed service information corresponding to the services to which the user is contracted.

In this way, conventionally, there has been no system for providing the user with the detailed service information required by the user. Accordingly, there have been cases where detailed service information not required by the user is provided to the user.

Therefore, the development of a communication system capable of providing a user with information (information concerning services) as required by the user (such as detailed service information) has been demanded.

### BRIEF SUMMARY OF THE INVENTION

An object of the present invention is to provide a service information providing system, a service information providing method and a control station, which are capable of providing a user with information (concerning a service) required by the user.

To achieve the object, according to a first aspect of the present invention, a service information providing system for providing information concerning a service to communication instruments used by users of a communication network, through the communication network; the service information providing system comprises an attribute information storage unit, configured to store an attribute information reference table in which information for specifying each user and attribute information showing attributes of the user, correspond to each other; a service storage unit configured to store a service reference table in which information specifying each service is associated with information specifying detailed services (showing content more detailed than content indicated by the service (e.g.the service name)), and the attribute information of user; a receiver configured to receive information specifying the user according to the communication instrument and requests for given services to which the user is contracted; a service decision unit, configured to determine the attribute information of the user by referring to information specifying the user received by the receiver and the attribute information reference table, and to select given detailed services ,based on the attribute information of the user and requests for given services ,by referring to the service reference table, and a provider unit configured to provide the communication instrument of the user with detailed service information describing content of the given detailed services selected by the service decision unit.

### BRIEF DESCRIPTION OF THE DRAWINGS

Fig. 1 is a diagram showing a configuration of a service information providing system according to an embodiment of the present invention.
Fig. 2 is a diagram showing a configuration of an information transmission device according to the embodiment.
Fig. 3 is a diagram showing a configuration of a service control station according to the embodiment.
Fig. 4 is a diagram showing a configuration of an information providing station according to the embodiment.
Fig. 5 is a diagram showing a first service reference table according to the embodiment.
Fig. 6 is a diagram showing a second service reference table according to the embodiment.
Fig. 7 is a sequence diagram showing a part of a service information providing method according to the embodiment.
Fig. 8 is a sequence diagram showing a part of the service information providing method according to the embodiment.
Fig. 9 is a sequence diagram showing a part of the service information providing method according to the embodiment.
Fig. 10 is a sequence diagram showing a part of the service information providing method according to the embodiment.
Fig. 11 is a diagram showing a service information providing system according to a modified example.
Fig. 12 is a sequence diagram showing a service information providing method according to the modified example.

### DETAILED DESCRIPTION OF THE INVENTION

Various embodiments of the present invention will be described with reference to the accompanying drawings. It is to be noted that the same or similar reference numerals are applied to the same or similar parts and elements throughout the drawings, and the description of the same or similar parts and elements will be omitted or simplified.

Generally and as is conventional in the representation of devices, it will he appreciated that the various drawings are not drawn to scale from one figure to another, nor within a given figure.

In the following descriptions, numerous specific details are set forth such as specific signal values, etc. to provide a thorough understanding of the present invention. However, it will be obvious to those skilled in the art that the present invention may be practiced without such specific details. In other instances, well-known circuits have been shown in block diagram form in order not to obscure the present invention with unnecessary detail.

### DETAILED DESCRIPTION OF THE PREFERRED EMBODIMENT

### (Configuration of service information providing system)

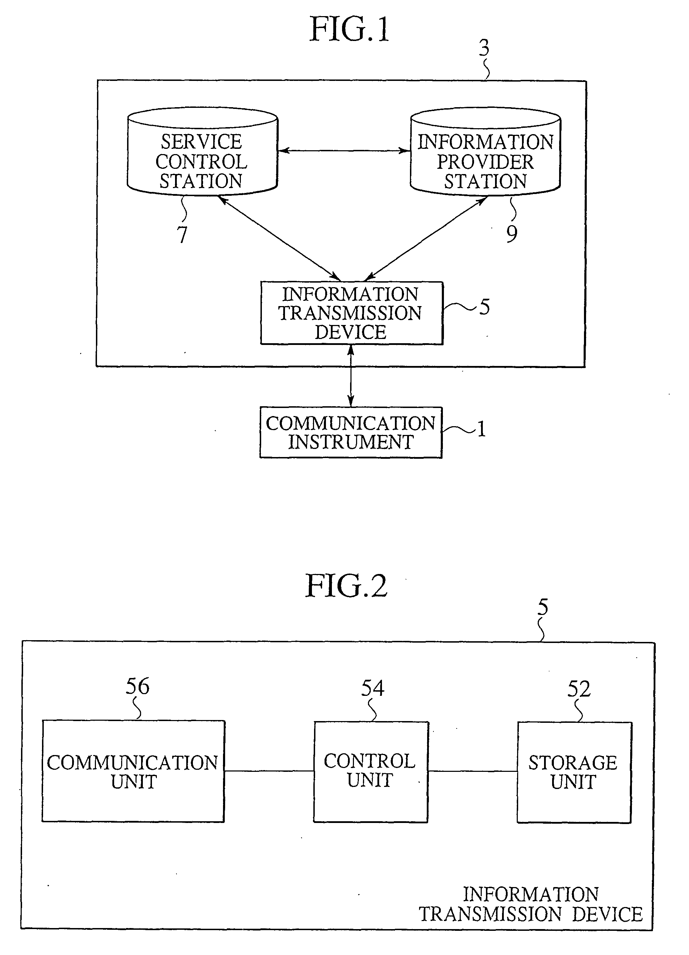

Fig. 1 is a diagram showing a configuration of a service information providing system according to an embodiment of the present invention. The service information providing system of the embodiment includes a communication instrument 1 used by a user of a communication line network 3, an information transmission device 5 disposed on the communication line network 3, a plurality of information provider stations 9, and a service control station 7.

The communication line network 3 is a communication network implemented with a wired/wireless system, for example. The communication line network may include a packet transfer communication network, a circuit switching network, a personal digital communications (PDC) network, or a wideband code division multiple access (W-CDMA) network, for example. In addition, the communication network may also include a mobile communication network, a personal handy-phone system (PHS) communication network, a second-generation mobile communication network (a digital mobile communication network), and a third-generation mobile communication network, for example.

The communication instrument 1 includes a communication unit (not shown) implementing the communication of various data uses the information transmission device 5, a display unit (not shown) displaying the various data, an input unit (not shown) allowing the user to input a variety of information, and a control unit (not shown) controlling the respective units. The communication instrument 1 may include, for example, a communication terminal device such as a personal computer (PC), a portable terminal device, a mobile phone, or the like. Meanwhile, the control unit stores identification information (such as a call-up number or an internet protocol (IP) address) allocated to the information transmission device 5.

In accordance with a method of changing a given service, a request for changing the given service (which a user has contracted) is inputted to the input unit of the communication instrument 1. The display unit of the communication instrument 1 displays sort information, which is received by the communication unit.

The information transmission device 5 is a device for transmitting and receiving data with the communication instrument 1 through the communication line. The information transmission device 5 may be a base station or switching equipment, for example. The information transmission device 5 is connected to the service control station 7 and the information provider stations 9 through the communication line network 3.

Fig. 2 is a diagram showing a configuration of the information transmission device 5. The information transmission device 5 includes a storage unit 52 in which various data is stored, a communication unit 56 to transmit to and receive data from each device in the system( the communication instrument 1, the service control station 7 and the information provider stations 9), and a control unit 54 to obtain the various data from the storage unit 52 or to control the respective units.

The storage unit 52 stores a first user reference table in which sender number, information specifying the communication instrument, and information specifying the user are severally related one another. In addition, the storage unit 52 stores a second user reference table in which the information specifying the user, an enrollment type, and "the information agreed between the user and an administrator administering the communication line network 3 by contract" are related one another. Here, the enrollment type is a type of service, to which the user is contracted, for example.

The control unit 54 stores identification information (such as a call-up number or an IP address) allocated to the service control station 7, and identification information (such as a call-up number or an IP address) allocated to each of the information provider stations 9.

The service control station 7 transmits the number (e.g. call-up number ) of a certain information provider station 9 to the information transmission device 5. The certain information provider station 9 is the information provider station 9 which administers service information describing content of the service requested by the user. Moreover, the service control station 7 transmits to the information provider station 9 information specifying a detailed service corresponding to the requested service. The detailed service corresponding to the requested service indicates more detailed content than the content indicated by the requested service. Moreover, the service control station 7 performs given data communication with the information transmission device 5 and the information provider stations 9. The given data communication is executed for the following reason. The reason is to provide information concerning a service (such as service information) to the communication instrument 1 used by the user.

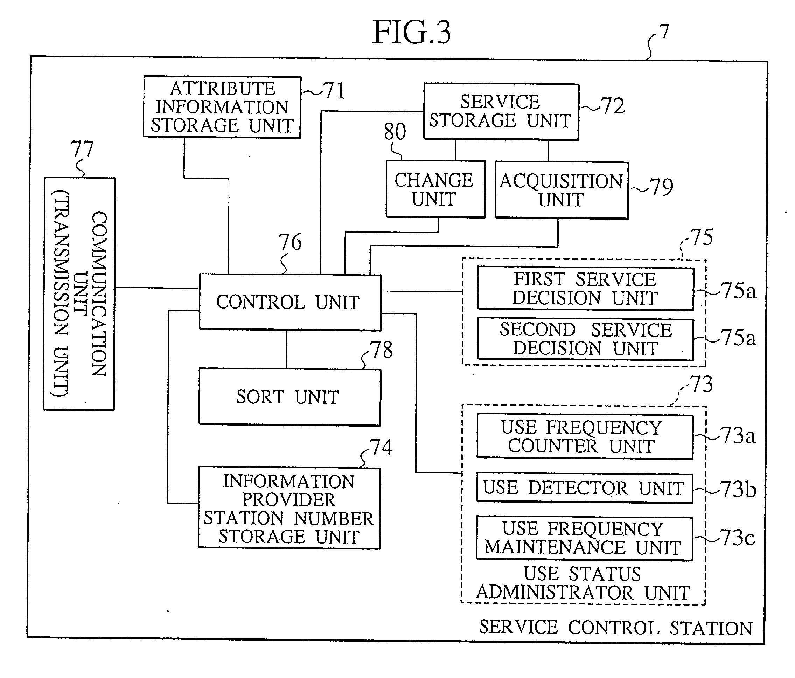

Fig. 3 is a diagram showing a configuration of the service control station 7. The service control station 7 includes an attribute information storage unit 71, a service storage unit 72, an use status administrator unit 73, an information provider station number storage unit 74, a service decision unit 75, a communication unit (a transmission unit) 77 which implements data communication with the information provider stations 9 and the information transmission device 5, and a control unit 76 for controlling the respective units.

The attribute information storage unit 71 stores an attribute information reference table, in which information specifying each user ,and attribute information describing attributes of a user correspond with each other. The attributes of a user may include gender, age, annual income, occupation, and hobbies of the user, for example.

The service storage unit 72 stores a first service reference table and a second service reference table. In the first service reference table, information specifying services contracted to by each user ,and information specifying the detailed services correspond to each other. The services contracted to by each user are the service contracted to and arranged for between the user and the administrator of the communication line network 3. Moreover, in the first service reference table, information specifying each service and information specifying a plurality of detailed services correspond severally to one other.

In particular, the detailed services corresponding to a service will be described as follows. Description will be made below in the case of the service being a concert service. The content of the concert service is described in the concert service information. In this concert service information, content about each category of concert (such as classic music) is not described in detail.

The detailed service corresponding to the concert service may be a classical music concert service or a rock concert service, for example. In other words, the detailed service corresponding to the service can be equivalent to a subordinate concept of the service. Accordingly, more detailed content than the content of the concert service is described in the detailed service information. In particular, content concerning the classical music concert described in the classical music concert service information, is more detailed than the content (concerning the classical music concert) of the concert service information.

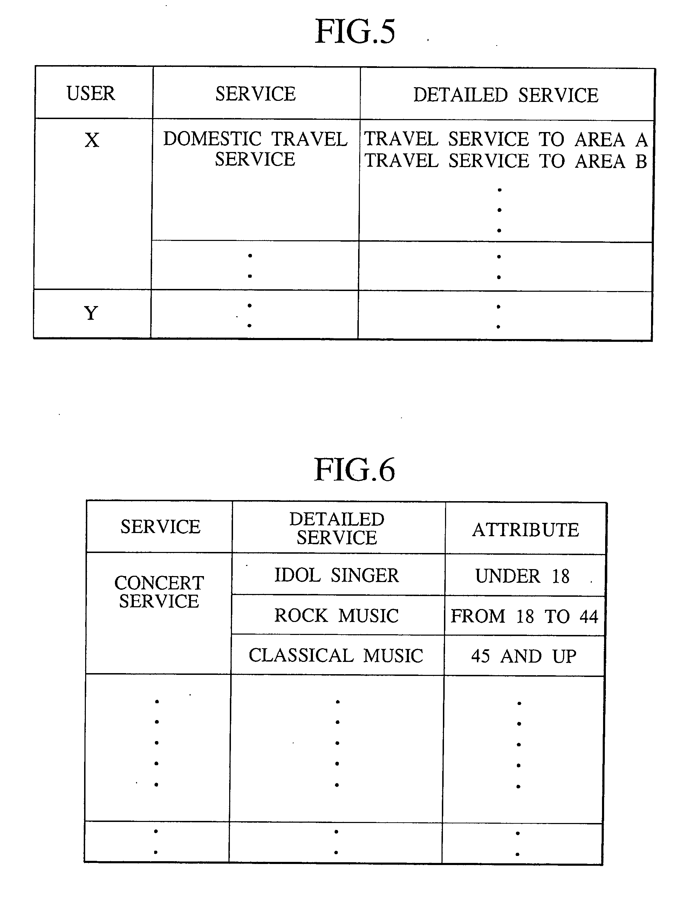

Fig. 5 is a diagram showing an example of the first service reference table. In this first service reference table, information specifying each user, information specifying service and information specifying detailed services are associated with one another. As described in Fig. 5, when the service contracted to by user x is a domestic travel service, the detailed services may be a travel service for area A and a travel service tor area B, for example.

In the second service reference table, information specifying each service "information specifying detailed services and attribute information of a user" are severally associated with each other. Fig. 6 is a diagram showing an example of the second service reference table. When the service is the concert service, the detailed services are " an idol singer concert service " , " a rock music concert service " , and " a classical music concert service " , for example.

Now, if the attribute information of a user is age information, for example, the respective detailed services correspond to the age information as described below. Specifically, " the idol singer concert service " is associated with the age information of under 18. The rock music concert service is associated with the age information of from 18 to younger than 45. The classical music concert service is associated with age information of 45 and up.

The " information provider station number storage unit 74 " stores an " information provider station reference table " . In this reference table, information specifying each service and the number (e.g. call-up number) for each information provider station 9 correspond to each other.

The use status administrator unit 73 administers the " use status " meaning " information which shows how each detailed service is used by each user ". The use status administrator unit 73 includes a use detector unit 73b, a use frequency counter unit 73a, and a use frequency maintenance unit 73c.

The use detector unit 73b detects use of a detailed service. The processing of the use detector unit 73b will be specitically described below. " An instruction to provide the communication instrument 1 of the user with detailed service information describing content of a given detailed service " , " information specifying the user ", and " information specifying the given detailed service " are transmitted from the information provider station 9 to the use detector unit 73b. Based on this information, the use detector unit 73b detects the user's utilization of the given detailed service. Thereafter, the use detector unit 73b transmits a detection result to the use frequency counter unit 73a. In this case, information specifying the user and information specifying the given detailed service are transmitted to the use frequency counter unit 73a.

The use frequency counter unit 73a counts use frequency, which indicates the number of times that each user uses the detailed service, for each user and for each detailed service. To be more precise, the use frequency counter unit 73a counts the use frequencies corresponding to the user and the detailed service, based on the transmitted detection result. Thereafter, the use frequency counter unit 73a transmits a use frequency number thus counted ,to " the use frequency maintenance unit 73c " corresponding the number to the user and the detailed service.

The use frequency maintenance unit 73c stores the use frequency counted by the use frequency counter unit 73a ,classifying each user and each detailed service. Moreover, when the use frequency number corresponding to the user and the detailed service is transmitted from the use frequency counter unit 73a, the use frequency maintenance unit 73c uses this to rewrite the stored use frequency number corresponding to the user and the detailed service.

The service decision unit 75 includes a first service decision unit 75a and a second service decision unit 75b. When information specifying the user ,and a request for a given services contracted to by the user are received by the communication unit 77 (a receiver unit), the first service decision unit 75a executes the following process. The service decision unit 75 selects the given detailed service from a plurality of detailed services, corresponding to the given service, based on the use status administered by the use status administrator unit 73, and the first service reference table.

The process in the service decision unit 75 will be specifically described below. The " information specifying the user " and the " request for the given services contracted to by the user " from the communication instrument 1 are received by the communication unit 77 (the receiver unit). Then, the first service decision unit 75a refers to the first service reference table and selects the plurality of detailed services corresponding to the given service. Thereafter, the first service decision unit 75a acquires the use frequencies corresponding to the user and the plurality of detailed services from the respective use frequencies maintained in the use frequency maintenance unit 73c. Subsequently, the first service decision unit 75a selects the given detailed service from the plurality of detailed services, based on the use frequencies of the plurality of detailed services.

For example, the first service decision unit 75a decides the detailed service corresponding to the highest use frequency, as the given detailed service, based on the use frequencies of the plurality of detailed services.

When the communication unit 77 (the receiver unit) receives information specifying the user and the request for the given services contracted to by the user from the communication instrument 1, the second service decision unit 75b performs the following process. The second service decision unit 75b refers to the information specifying the user and the attribute information reference table, and thereby obtains the attribute information of the user. Thereafter, the second service decision unit 75b refers to the second service reference table and thereby selects the given detailed service ,based on the attribute information of the user and the request for the given service. Concrete explanations for the service decision unit 75 will be described later.

Meanwhile, the service control station 7 includes a sort unit 78. Sorting performed by the sort unit 78 will be described below. The communication unit 77 (the receiver unit) receives from the communication instrument 1 a request for information which shows how the given service (to which the user is contracted) is used by the user. The service decision unit 75 refers to the first service reference table and obtains the plurality of detailed services corresponding to the given service. Then, the sort unit 78 acquires the use frequencies corresponding to( the user and to the plurality of detailed services) from the respective use frequencies maintained in the use frequency maintenance unit 73c. Thereafter, the sort unit 78 sorts the detailed services corresponding to the acquired use frequencies in descending in order of often used frequencies. In addition, the sort unit 78 generates sorting information which indicates information specifying the detailed services thus sorted.

Moreover, the service control station 7 includes a acquisition unit 79. When the communication unit (the receiver unit) 77 receives from the communication instrument 1 an instruction to transmit information specifying the service (contracted to by the user) and information specifying detailed services corresponding to the service, the acquisition unit 79 executes the following process. The acquisition unit 79 refers to the first service reference table and acquires information specifying the service and information specifying the detailed services.

An example of information specifying a service is a service name. In the same way, an example of information specifying a detailed service is a detailed service name. In this case, when information specifying services and information specifying detailed services is recorded on the first service reference table, the acquisition unit 79 possesses the following functions. The acquisition unit 79 possesses a function to convert information specifying the services into service names, and a function of converting information specifying detailed services into detailed service names.

Furthermore, the service control station 7 includes a change unit 80. The changing process performed by the change unit 80 will be described below. The communication unit (the receiver unit) 77 receives from the communication instrument 1 ,a request to change a given services contracted to by the user. The change unit 80 changes the information concerning the given service from the information contained in the first service reference table, based on the request to change the given service.

Meanwhile, the control unit 76 of the service control station 7 receives information specifying the given detailed service selected by the service decision unit 75. Then, based on an instruction by the control unit 76, the communication unit ( transmitter unit) 77 transmits an instruction to provide the communication instrument 1 of the user with detailed service intormation describing the content of the given detailed service to the information provider station 9. Moreover, the control unit 76 maintains identification information (such as a call-up number or an IP address) allocated to the information transmission device 5, identification information allocated to each information provider station 9, and identification information allocated to each communication instrument 1.

Meanwhile, the communication unit (the transmitter unit) 77 transmits the sorting information generated by the sort unit 78 to the communication instrument 1. Furthermore, the communication unit 77 transmits to the communication instrument 1, information specifying the service and information specifying the detailed service (or services), acquired by the acquisition unit 79.

Each service provider station 9 administers the information concerning a service (such as service information or information indicating a method for using the service). Moreover, each information provider station 9 provides communication instrument 1 with the information concerning the service ,through the information transmission device 5. Furthermore, each information provider station 9 performs data communication with the service control station 7. This data communication is done for the following reason. It is to enable the information concerning the service (such as the service information) to be provided to the communication instrument 1.

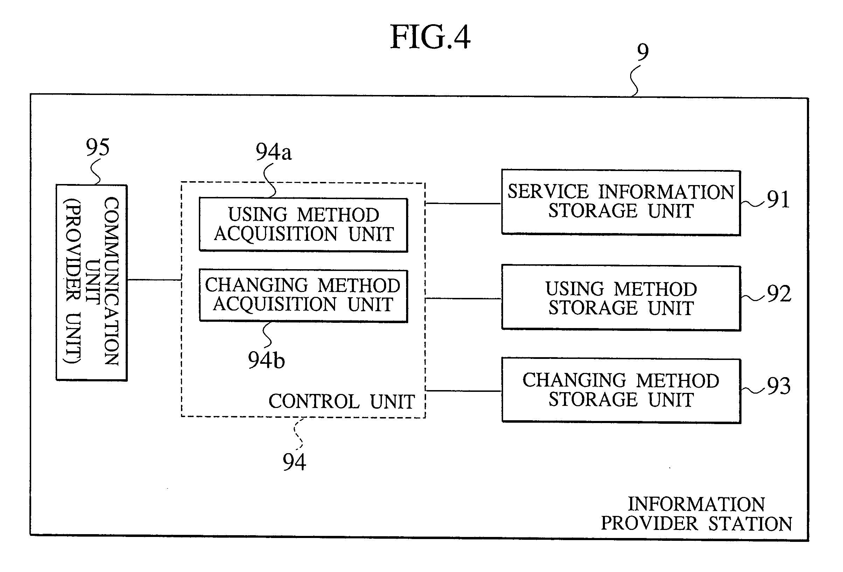

Fig. 4 is a diagram illustrating a configuration of the information provider station 9. The information provider station 9 includes a service information storage unit 91 to store service information and detailed service information, a using method storage unit 92, a changing method storage unit 93, a communication unit 95 (a provider unit) executing data communication with each device (the service control station 7 , the information transmission device 5), and a control unit 94 controlling the respective units.

The service information storage unit 91 stores a plurality of detailed service information corresponding to each service administered by the information provider station 9. Each item of detailed service information indicates the content of each detailed service. Moreover, each item of detailed service information is associated with information specifying the service (such as the service name) and the information specifying each detailed service (such as the detailed service name). Furthermore, the service information storage unit 91 stores not only detailed service information , but also service infommation.

If the service is a domestic travel service, the detailed services corresponding to the domestic travel service are a travel service to area A and a travel service to area B, for example. Travel service information about area A (the detailed service information) includes transportation in area A, information on shops , accommodations tourist spors, event information for area A, and information regarding costs.

The using method storage unit 92 stores information indicating the method of using the service administered by the information provider station 9. Information indicating the method of using the service includes the procedures by requested a user to acquire service information or detailed service information, for example. More precisely, information indicating the method of using the service includes, for example, information which indicates the procedures that a user should follow to input a service request, which indicates that a user should input the items displayed on the display unit of the communication instrument 1, which indicates the procedures for displaying a transmitted service information or a transmitted detailed service information, and the like.

The changing method storage unit 93 stores information indicating the method of changing the service administered by the information provider station 9. The information indicating method of changing the service, includes procedures required by a user to change the services contracted to by the user, or to change the detailed services corresponding to the service.

To he more precise, information indicating the method of changing the service includes information concerning a server device or shop for a user to apply for the service or to apply for cancellation , information about the shop to which the user is supposed to pay a certain amount of money, and the like. Moreover, the information indicating the method of changing the service, includes, for example, information which indicates the procedure that a user should follow to input the request for the service change, information that a user should input for the respective items displayed on the display unit of the communication instrument 1, and the like.

Meanwhile, the control unit 94 of the information provider station 9 includes a using method acquisition unit 94a and a changing method acquisition unit 94b. The processing for the using method acquisition unit 94a will be described below. The communication unit 95 (the receiver unit) receives a request for information indicating the method of using the given service ( contracted to by the user). Thereafter, the using method acquisition unit 94a acquires the information indicating the method of using the given service from the using method storage unit 92.

The process in the changing method acquisition unit 94b will be described below. The communication unit 95 (the receiver unit) receives a request for information indicating the method of changing the given service. Thereafter, the changing method acquisition unit 94b acquires information indicating the method of changing the given service from the using method storage unit 92.

The changing method acquisition unit 94b and the using method acquisition unit 94a may be configured independently from the control unit 94. Moreover, the control unit 94 stores the identification information (such as a call-up number or an IP address) allocated to the service control station 7, the identification information allocated to the information transmission device 5, and the identification information allocated to each communication instrument 1.

The communication unit (the provider unit) 95 transmits detailed service information describing the content of the given detailed service selectd by the service decision unit 75, to the communication instrument 1. Moreover, the communication unit 95 transmits information indicating the method of using the given service acquired by " the using method acquisition unit 94a ", to the communication instrument 1. Furthermore, the communication unit 95 transmits the information indicating the method of changing the given service (the given service acquired by the changing method acquisition unit 94b), to the communication instrument 1.

Information indicating the methods of using the services severally administered by " respective information provider stations 9, " may be also stored in a single device. Similarly, information indicating the methods of changing the services severally administered by " respective information provider stations 9 " , may be also stored in a single device. Moreover, the said single device may also possess the Function of the using method acquisition unit 94a and the function of the changing method acquisition unit 94b.

Furthermore, the single device may also possess a function of transmitting information ( information indicating the method of using the given service) to the communication instrument 1. In addition, the single device may also possess a function ot transmitting the information (information indicating the method of changing the given service ) to the communication instrument 1.

### (Providing method of service information)

The process performed by the above-described service information providing system will he described below. Firstly, contracts are made between respective users and the administrator of the communication line network 3. In the contracts, services usable by the users are agreed. In this case, the administrator of the communication line network 3 acquires attribute information about the users.

Moreover, the administrator inputs information necessary for the generation of the attribute information reference table to an input unit (not shown) of the service control station 7. Then, the control unit 76 generates the above-described attribute information reference table and stores the attribute information reference table in the attribute information storage unit 71. Furthermore, the administrator inputs information necessary for the first service reference table and information necessary for the second service reference table to the input unit (not shown) of the service control station 7. Then, the control unit 76 generates the above-described first service reference table and second service reference table, and stores the first service reference table and the second service reference table in the service storage unit 72.

Moreover, for example, the administrator inputs information concerning the method of using the services administered by the information provider stations 9 , to input units (not shown) in the information provider stations 9. The control unit 94 generates the information indicating the method of using the services, and stores the information in the using method storage unit 92. The administrator inputs information showing the method of changing the services administered by the information provider stations 9 ,to input units (not shown) of the information provider stations 9. The control unit 94 generates the information indicating the method of changing the services, and stores the information in the changing method storage unit 93.

Furthermore, the administrator inputs information concerning service information and information concerning the detailed service information, to the input units (not shown) of the information provider stations 9. The control unit 94 generates the service information and the detailed service information, and stores the service information and the detailed service information in the service information storage unit 91.

Similarly, the administrator inputs information necessary for the generation of the first user reference table and information necessary for the generation of the second user reference table ,to an input unit (not shown) of the information transmission device 5. The control unit 54 of the information transmission device 5 ,generates the first user reference table and the second user reference table, and stores the first user reference table and the second user reference table in the storage unit 52.

The processes throughout the following sections (1) to (4) may be executed continuously. Alternatively, respective processes throughout the sections (1) to (4) may he executed independently.

### (1) Process of providing the service name and the detailed service names

Description will be made herein by use of the service name, which is an example of information specifying a service. The process of providing information specifying services other than the service name, and the process of providing information specifying detailed services are also performed in accordance with the process below.

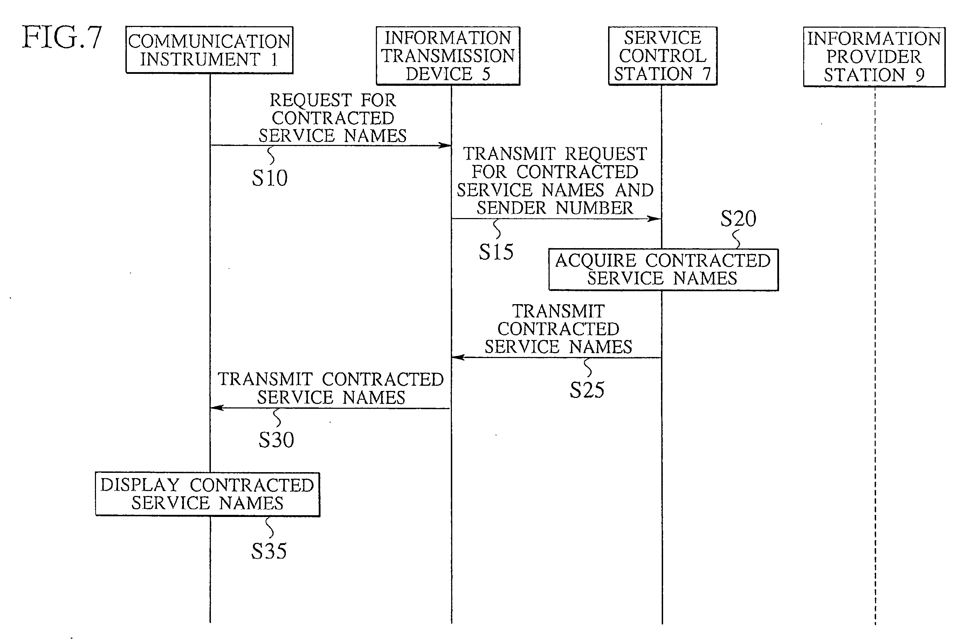

Fig. 7 is a sequence diagram showing the process of providing the service name and the process of providing the detailed service names.

In step S10, the user inputs that the user requests the service name of the services contracted to by the user and the detailed service names corresponding to the service, to the input unit of the communication instrument 1. Then, the request (the inquiry reason) for the service name and the detailed service names (the service name and the detailed service names will be hereinafter collectively referred to as " the contracted service names "), and the sender number of the user, are transmitted to the intormation transmission device 5 through the communication unit of the communication instrument 1.

In step S15, the information transmission device 5, to which the request for the contracted service names is transmitted, transmits the request for the contracted service names and the information identifying the user, to the service control station 7.

To be more precise, the process proceeds below. The request for the contracted service names and the sender number, are transmitted to the control unit 54 through the communication unit 56. The control unit 54 reads the first user reference table, from the storage unit 52. The control unit 54 refers to the first user reference table, and acquires the information specifying the user corresponding to the sender number (the information specifying the user will be hereinafter referred to as " user information " ).

Thereafter, the control unit 54 transmits the request for the contracted service names and the user information, to the service control station 7 through the communication unit 56 and the communication line network 3, based on the identification information (such as a call-up number) of the service control station 7.

In this case, the following process is executed, for example. The information transmission device 5 transmits the request for the contracted service names and the user information, to a given router device inside the communication line network 3, based on the identification information (such as the call-up number) of the service control station 7. The given router device (such as the information transmission device 5) transmits the request for the contracted service names and the user information, to the service control station 7, based on the identification information of the service control station 7.

In step S20, the service control station 7 acquires the service name of the services contracted to by the user and the detailed service names corresponding to the service. Concrete explanations for the process are below. The request for the contracted service names and the user information is received by the communication unit 77 (the receiver unit) and is transmitted to the control unit 76 in the service control station 7. The control unit 76 instructs the acquisition unit 79 to acquire the contracted service names contracted to by the user (as identified by the user information), based on the request for the contracted service names.

The acquisition unit 79 searches for the user whom the " user information " specifies with reference to the first service reference table in the service storage unit 72. Thereafter, the acquisition unit 79 refers to the first service reference table, and thereby acquires the service name corresponding to the searched user and the detailed service names corresponding to the service.

When the services contracted to by user x is a concert service, for example, the service name corresponding to the user, is the service name "concert service". Meanwhile, the detailed service names corresponding to the service are the detailed service names "classical music concert service, rock music concert service, and jazz concert service", for example.

However, it the detailed services contracted to by the user, are limited to a part of the plurality of the detailed services, the acquisition unit 79 acquires the detailed service names corresponding to the part of the detailed services.

In step S25, the service control station 7, transmits to the information transmission device 5, the user information, the service name corresponding to the services contracted to by the user, and the detailed service names corresponding to the service.

A concrete explanation for the process in step S25 is as follows. The control unit 76 in the service control station 7 transmits the contracted service names and the user information, to the information transmission device 5 through the communication unit 77, based on the identification information of the information transmission device 5.

In step S30, " the information transmission device 5 " transmits the contracted service names, to the communication instrument 1 of the user. Concrete explanations for the process will be described below. The control unit 54 in the information transmission device 5, acquires the contracted service names and the user information. The control unit 54 selects the communication instrument 1 corresponding to the user information, by referring to the first user reference table.

Thereafter, the control unit 54 transmits the contracted service names, to the selected communication instrument 1, based on the identification information of the selectd communication instrument 1. Then, in step S35, the contracted service names are transmitted to the display unit, through the communication unit and the control unit of the communication instrument 1. The display unit of the communication instrument 1, displays the contracted service names (the service name corresponding to the services contracted to by the user and the detailed service names corresponding to the service).

### (2) The process of providing information indicating the method of using the service

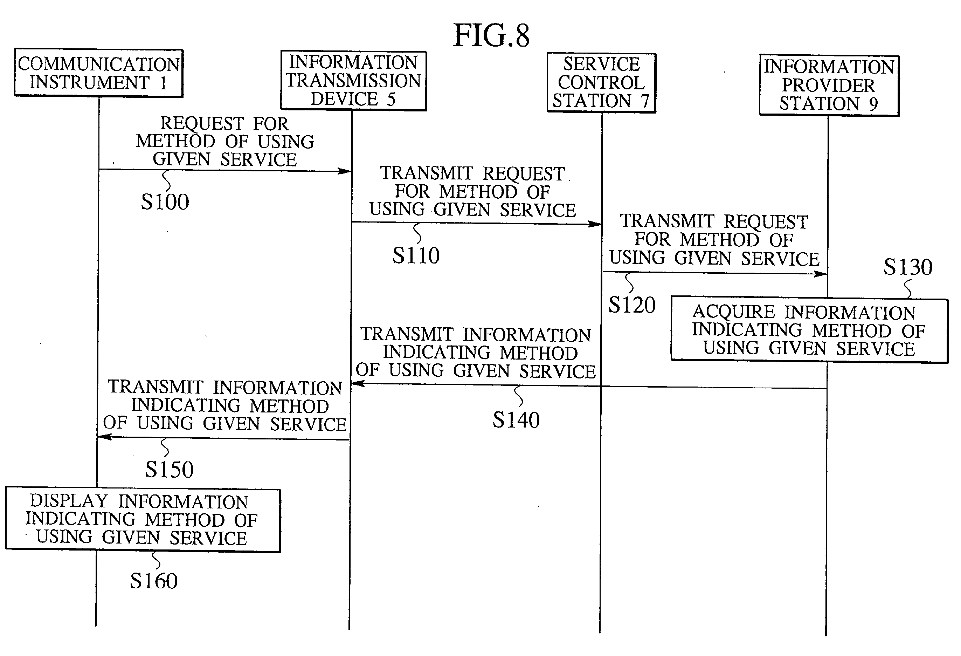

Fig. 8 is a sequence diagram which explains the process of providing information indicating the method of using the service. In step S100, the communication instrument 1 transmits a request for information indicating a method of using a given service, to the information transmission device 5. A concrete explanations for the process will be given below. The user inputs the request for the information instructing the method of using the given service, to the input unit of the communication instrument 1. In this case, the information specifying the given service is also inputted to the input unit.

The control unit of the communication instrument 1, transmits the inputted information to the information transmission device 5, based on the identification information (such as an IP address) of the information transmission device 5. In this case, the sender number( an identification number of the communication instrument 1) is transmitted to the information transmission device 5.

In step S110, " the information transmission device 5 " receives the request (for information indicating the method of using the given service), and the like, from the communication instrument 1. Then, the information transmission device 5 transmits the request to the service control station 7. Concrete explanations for the process will be described below. The request and the sender number are transmitted to the control unit 54 through the communication unit 56. The control unit 54 refers to the first user reterence table, and thereby acquires user information corresponding to the sender number. Thereafter, the control unit 54 transmits to the service control station 7, the user information and the request for information indicating the method of using the given service.

In step S12U, the service control station 7 selects the information provider station 9 which administers information concerning the given service. Then, the service control station 7, transmits the request ( for information indicating the method of using the given service) and the user information, to the information provider station 9.

A concrete explanation of the processing will he given below. The user information and request are transmitted to the communication unit 77 (the receiver unit) through the communication line network 3. The communication unit 77 (the receiver unit) receives the user information and the request. Thereafter, the user information and the request, are transmitted to the control unit 76. The control unit 76 reads the first service reference table, from the service storage unit 72. Subsequently, the control unit 76 refers to the first service reference table and judges as to whether or not the given service is included in the services which are contracted to by the user (specified in the user information).

If the given service is concluded as not being included therein, the control unit 76 transmits to the communication instrument 1 through the information transmission device 5 , a response stating that the information indicating " the method of using the given service " cannot be provided. The display unit of the communication instrument I, displays the response.

If the given service is concluded to be included therein, the control unit 76 reads " the information provider station reference table " from the " information provider station number storage unit 74 ". Then, the control unit 76 refers to the table and selects the number (e.g.call-up number) of the information provider station 9 which administers the information concerning the given service. The control unit 76 transmits the request fur the information indicating " the method of using the given service " and the user information, to the information provider station 9, based on the identification information (such as an IP address) of the information provider station 9 (corresponding to the number of selectd information provider station).

In step S130, the information provider station 9, acquires information indicating " the method of using the given service ". Concrete explanations for the processing will be described below. The user information and the request for the information indicating " the method of using the given service " ,are transmitted to the control unit 94 through the communication unit 95 (the receiver unit). The control unit (the using method acquisition unit 94a) accesses the using method storage unit 92. Then, the using method acquisition unit 94a, acquires information indicating " the method of using the given service " from the using method storage unit 92.

Therefore, it can be also said that the " using method acquisition unit 94a " acquires information indicating " the method of using the given service " , when the request for information indicating " the method of using the given service (contracted to by the user) " is received by the communication unit 77.

In step S140, the control unit 94 transmits the acquired information indicating " the method of using the given service " and the user information, to the information transmission device 5, through the communication unit 95, based on the identitication information (such as the IP address) of the information transmission device 5.

In step S15U, information indicating " the method of using the given service and the user information, are transmitted to the control unit 54 through the communication unit 56. The control unit 54 reads the first user reference table from the storage unit 52. Then, the control unit 54 refers to the first user reference table, and thereby selects the communication instrument 1 corresponding to the user information. Thereafter, the control unit 54 transmits information indicating " the method of using the given service " , to the selectd communication instrument 1, based on the identification information (such as the IP address) of the communication instrument 1.

In step S160, information indicating " the method of using the given service " is transmitted to the display unit of the communication instrument 1, through the communication unit and the control unit thereof. The display unit of the communication instrument 1, displays the information indicating " the method of using the given service ".

The process of providing information indicating " a method of changing a service " is also carried out in accordance with the above-described steps. In this case, throughout the description regarding the steps S100 to S160, the terminology of " the method of using the given service " should be replaced with the terminology of " the method of changing the given service " . Moreover, throughout the description regarding the steps S100 to S160, the terminology of " the using method acquisition unit 94a " should be replaced with the terminology of " the changing method acquisition unit 94b ", and the terminology of " the using method storage unit 92 " should he replaced with the terminology of " the changing method storage unit 93 ".

### (3) Process of providing detailed service information

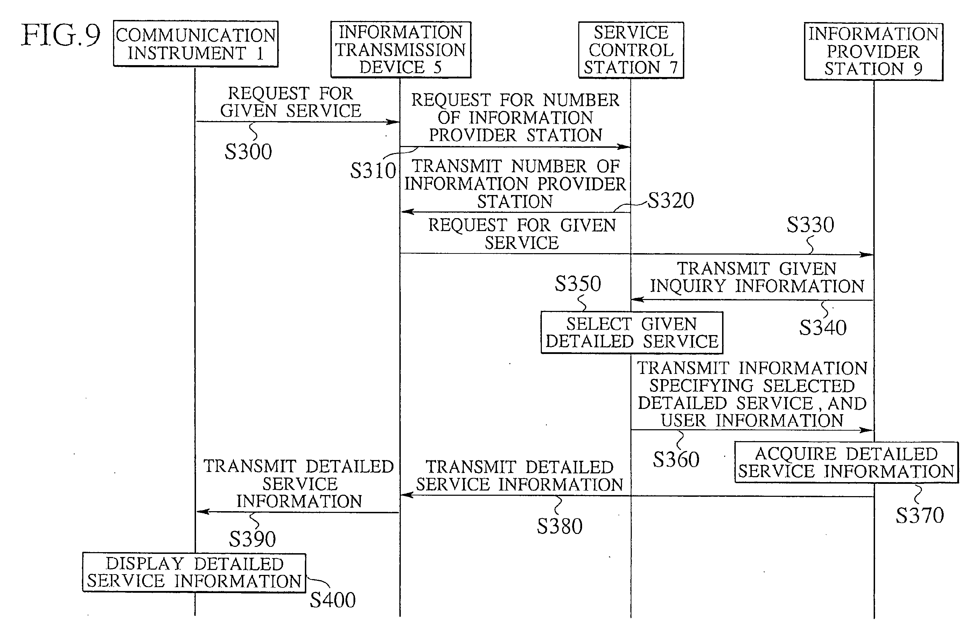

Fig. 9 is a sequence diagram which explains a process of providing detailed service information. In step S300, the communication instrument 1 transmits a request for a given services contracted to by the user (hereinafter simply referred as the given service), to the information transmission device 5. A concrete explanations of the process will be given below. The user inputs the request for the given service, to the input unit of the communication instrument 1. Then, the inputted information is transmitted to the control unit. The control unit transmits the sender number and the request for the given service, to the information transmission device 5.

Here, the request for the given service means request for a detailed service information describing the content of the detailed service corresponding to the given service. However, the request for the given service, may also include a request for the given service information ( information describing the content of the given service) in addition to the request for the detailed service information. The user can also input a request for the given detailed service, to the input unit of the communication instrument 1. The request for the given detailed service, is a request for detailed service information describing the content of the given detailed service.

In step 310, the information transmission device 5 transmits a request for the number of the information provider station 9 which administers information concerning the given service, to the service control station 7. A concrete explanation of the process will he given below. The sender number and the request for the given service are transmitted to the control unit 54 of the information transmission device 5. The control unit 54 reads the first user reference table from the storage unit 52. The control unit 54 refers to the first user reference table, and thereby acquires user information corresponding to the sender number. Moreover, the control unit 54 reads the second user reference table from the storage unit 52. The control unit 54 acquires information such as an " enrollment type " , which corresponds to the user specified by the user information.

Thereafter, the control unit 54 transmits to the service control station 7, the user information, the request for the given service, and the request for the number of the information provider station 9 which administers information concerning the given service, for example. In this ease, the control unit 54 may transmit the following information P1, to the service control station 7.

The information P1 includes, for example, the sender number, the enrollment type of the sender, a requested bearer, a cull identification number of an inquiry object, information about a inquiry reason, information agreed between the user and the administrator by contract, and a service identifier (a number which is agreed between the user and the administrator in advance ).

The " call identification number of the inquiry object " ,is given to a communication signal exchanged between two devices from among ( the information transmission device 5, the service control station 7, and the information provider station 9). Moreover, each of the devices identifies the communication signal based on the call identification number. More specifically, each of the call identification numbers is given to the communication signal exchanged between two devices in the processes of the steps S310, S320, S330, S340, S360 and S380 illustrated in Fig. 9.

" The information about a inquiry reason " includes, for example, "a request for the given service", "information indicating that the inquiry will be made again because a line was busy when the first inquiry was made", "information indicating an inquiry call", and the like. The service identifier is information about the respective devices to identify a service. Meanwhile, a detailed service identifier is information about the respective devices to identify a detailed service. In step S310, a given service identifier is transmitted to the service control station 7.

In step S320, the service control station 7 acquires the request for the number of " the information provider station 9 " which administers information concerning the given service. Thereafter, the service control station 7 transmits the number of " the information provider station 9 " to the information transmission device 5 based on the request.

A concrete explanations for the process will be given below. The request is transmitted to the control unit 76 through the communication unit 77. The control unit 76 reads " the information provider station reference table " from the storage unit 74. Then, the control unit 76 refers to the reference table, and acquires the number of " the information provider station 9 " corresponding to the given service, based on the identifier of the given service (or the information specifying the given service). Thereafter, the control unit 76 transmits the acquired number of " the information provider station 9 " to the information transmission device 5 through the communication unit 77. In this case, the control unit 76 may also transmit the following information P2 to the information transmission device 5.

The information P2 includes, for example, the call identification number of the inquiry object, the information agreed between the user and the administrator by contract, and the number (e.g. call-up number) of the information provider station 9.

In step S330, the information transmission device 5, transmits the request for the given service and the like, to the information provider station 9 which administers information concerning the given service. A concrete explanations of the process will be given below. The number (e.g. call-up number) of the information provider station 9 is transmitted to the control unit 54 through the communication unit 56. The control unit 54 transmits the given service identifier, the request for the given service, and the user information, to the information provider station 9 through the communication unit 77, based on the identification information of the information provider station 9 corresponding to the number of information provider station 9.

In step S340, the user information, the request for the given service, and the given service identifier are transmitted to the control unit 94 through the communication unit 95 (the receiver unit). The control station 94 transmits an inquiry information ( as to which detailed service information from among many detailed service information (information corresponding to the given service) is to be provided to the communication instrument 1), to the service control station 7. In this case, information specifying the given service (e.g. the identifier) and the user information is transmitted to the service control station 7. In this case, the control unit 94 may also transmit the following information P3 to the service control station 7.

The information P3 includes, for example, the call identification number of the inquiry object, information about a inquiry reason, the service identifier, and information predetermined between the service control Station 7 and the information provider station 9 (such as a series of strings written in extensible markup language (XML)).

In step S350, the service control station 7 selects the given detailed service (e.g. the identifier of the given detailed service) from among many detailed services corresponding to the given service, based on the inquiry information.

A concrete explanation for the process will be given below. The inquiry information, the user information, and the request for the given service are transmitted to the control unit 76 through the communication unit 77 (the receiver unit). The control unit 76 instructs the service decision unit 75, to select the given detailed service. In this case, the control unit 76 transmits the user information and the request for the given service to the first service decision unit 75a.

The first service decision unit 75a, reads the first service reference table from the service storage unit 72 through the control unit 76. The first service decision unit 75a refers to the first service reference table and acquires a plurality of detailed services corresponding to the given services contracted to by the user.

Then, the first service decision unit 75a accesses the " use frequency maintenance unit 73c " of the " use status administrator unit 73 " . Thereafter, the first service decision unit 75a acquires " the use frequencies " corresponding to the user and corresponding to the plurality of detailed services trom among all the use frequencies stored in the use frequency maintenance unit 73c. Moreover, the first service decision unit 75a selects the given detailed service from among a plurality of detailed services, based on the use frequencies of the plurality of detailed services. For example, on the basis of the use frequencies of the plurality of detailed services, the first service decision unit 75a selects the detailed service corresponding to the highest use frequency thereof as the given detailed service.

A concrete explanation of the process will be given below. The given service is assumed to be a concert service, and the detailed services are assumed to be a classical music concert service, a rock concert service, and a jazz concert service.

A request for the concert service, and information which specifies a user X, are transmitted to the first service decision unit 75a. Then, the use frequency maintenance unit 73c stores a use frequency (once) corresponding to " the user X and the classical music concert service ", a use frequency (seven times) corresponding to the " user X and the rock concert service " , and a use frequency (three times) corresponding to " the user X and the jazz concert service " . In this case, on the basis of the use frequencies of the plurality of detailed services, the first service decision unit 75a selects the detailed service (the rock concert service) corresponding to the highest use frequency (seven times) as the given detailed service.

The above-mentioned process by the service decision unit 75, is merely an example. For instance, the first service decision unit 75a, can also select N (N is an integer) detailed services corresponding to a high use frequency, as the given detailed services.

Meanwhile, the process in step S350 may be also executed below. Firstly, the second service decision unit 75b reads the " attribute information reference table " from the " attribute information storage unit 71 " through the control unit 76. Then, the second service decision unit 75b refers to the " attribute information reference table " and acquires the attribute information (such as the age, annual income, and hobbies) corresponding to the user specified by the user information.

Thereafter, the second service decision unit 75b reads the second service reference table ,from the service storage unit 72, through the control unit 76. Then, the second service decision unit 75b refers to the second service reference table, and selects the given detailed service, based on the attribute information of the user and information specifying the given service.

For example, description using Fig. 6 will be made below. The given service is assumed to be the concert service and the age of the user X is assumed to be 17 years old. The second service decision unit 75b refers to the second service reference table, and judges that " the detailed service corresponding to " the given service (the concert service) and the age information (17 years) " is equivalent to an idol singer concert service ". Eventually, the second service decision unit 75b selects " the idol singer concert service " as the given detailed service.

The above-described process by the second service decision unit 75b, is merely un example. For instance, the second service decision unit 75b can also select the given detailed service in consideration of two or more items of attribute information.

Moreover, in this embodiment, the following processing may be also executed as the process in step S350. The communication unit 77 (the receiver unit) receives a request for intormation which shows how the given service ( contracted to by the user) is used by the user . The control unit 76 instructs the sort unit 78 to perform sorting. The service decision unit 75 refers to the first service reference table and selects a plurality of detailed services corresponding to the given service.

Thereafter, the sort unit 78 acquires use frequencies corresponding to the user and the plurality of detailed services from among all the use frequencies stored in the use frequency maintenance unit 73c. In this case, the use frequencies are associated with detailed service identifiers respectively. Then, the sort unit 78 sorts the detailed services corresponding to the acquired use frequencies ,in order of high use frequencies. Meanwhile, the sort unit 78 generates the sorting information to indicate the information specifying the respective detailed services thus sorted. The sorting information thus generated is transmitted to the control unit 76. In response to the instruction from the control unit 76, the communication unit (the transmitter unit) 77 transmits the sorting information to the communication instrument 1 of the user, through the information transmission device 5. Then, the display unit of the communication instrument 1 of the user displays the sorting information. Such a display process may perform in step S400 described later.

In step S360, information (such as the detailed service identifier)specifying the given detailed service selectd by the service decision unit 75 and the user information are transmitted to the control unit 76. The control unit 76 transmits "an instruction to provide the communication instrument I (of the user) with the detailed service information (information describing the content of the given detailed service)", to the control unit 94 through the communication unit 77. In this case, the user information, information specifying the given service (such as the given service identitier), and information specifying the given detailed service (such as the given detailed service identifier) are transmitted to the control unit 94 of the information provider station 9.

In this process, the control unit 76 may transmit the following information P4 to the information provider station 9. The information P4 includes, for example, a given identifier (such as an identifier designating information concerning service stored in the service control station 7), a priority level of the information concerning a service (hereinafter referred to as " priority level ") and the information predetermined between " the service control station 7 " and " the information provider station 9 " (such as a series of strings written in XML).

The given identifier is the identifier of the given detailed service selectd by the service decision unit 75, for example. Meanwhile, each priority level is given severally to each information concerning a service, for example.

A concrete explanation is below. An assumption will be made herein that the service decision unit 75 selects the plurality of detailed services corresponding to the given service. The sort unit 78 acquires the use frequencies corresponding to " the user and the plurality of detailed services " from among all the use frequencies maintained in the use frequency maintenance unit 73c. Then, the sort unit 78 gives each detailed service a priority level respectively, based on a use frequency corresponding to the detailed service. Subsequently, the sort unit 78 performs a sorting process. As a result, the priority level and the sorting information are displayed on the display unit of the communication instrument 1.

Meanwhile, in step S360, the use status administrator unit 73 implements the following process. As described above, "the instruction to provide the communication instrument 1 of the user (e.g.user X) with the detailed service information describing the content of the given detailed service (such as a detailed service T11)" is transmitted to the information provider station 9.

Then, the foregoing instruction, the user information, and the information specifying the given detailed service are transmitted to the use detector unit 73b. The use detector unit 73b detects the utilization of the given detailed service T11 by the user X based on the information described above. Thereafter, the use detector unit 73b transmits a detection result to the use frequency counter unit 73a. In this case, information specifying the user X and information specifying the given detailed service T11 is transmitted to the use frequency counter unit 73a.

Based on the transmitted detection result, the use frequency counter unit 73a counts the use frequency corresponding to " the user X and the detailed service T11 " . For example, when the detection result is transmitted once, the use frequency counter unit 73a adds 1 to the use frequency number ( number corresponding to " the user X and the detailed service T11 " ).

Then, the use frequency counter unit 73a transmits the counted use frequency number to the use frequency maintenance unit 73c. The counted use frequency number is associated with " the user X and the detailed service T11".

The use frequency maintenance unit 73c stores the use frequency, which is associated with " the user X and the detailed service T11 ". Thereafter, when the use Frequency number corresponding to " the user X and the detailed service T11 ". is transmitted from the use frequency counter unit 73a, the use frequency maintenance unit 73c rewrites the use frequency number corresponding to " the user X and the detailed service T11 ".

In step S370, the control unit 94 reads the detailed service information corresponding to the information specifying the given detailed service (e.g. the detailed service identifier), from the service information storage unit 91, based on the information transmitted from the service control station 7.

In step S380, the control unit 94 transmits the detailed service information and the user information, to the information transmission device 5 through the communication unit (the provider unit) 95. In step S390, the control unit 54 of the information transmission device 5, reads the first user reference table from the storage unit 52. Then, the control unit 54 refers to the first user reference table and selects the communication instrument 1 corresponding to the user information. Thereafter, the control unit 54 transmits the detailed service information, to the communication instrument 1, based on the identification information (such as the IP address) of the selectd communication instrument 1.

In step S400, the detailed service information is transmitted to the control unit of the communication instrument 1. The control unit of the communication instrument 1 instructs the display unit to display the detailed service information. The display unit displays the detailed service information. Here, when a lot of detailed service information is displayed on the display unit, the display unit also displays the priority level corresponding to each item of detailed service information. Modification of the processing in Section (3)

During the processing in step S350, the user can also select a given detailed service from a plurality of detailed services corresponding to the given service. In this case, the service decision unit 75 does not perform the selection of the given detailed service from the plurality of detailed services corresponding to the given service.

The user inputs information (the user selects the given detailed service corresponding to the given service) to the input unit of the communication instrument 1. Then, information specifying the plurality of detailed services is transmitted to the communication instrument 1. The user can perform the above-mentioned selection based on the information specifying the plurality of detailed services that is displayed on the display unit of the communication instrument 1.

If the information provider station 9 is located outside the communication line network 3, the given identifier included in the information P4 is transmitted to the information provider station 9, in the form of designating information other than the information concerning the services held by the service control station 7. Here, the case where the service identifier is included in the information P3 is the case of transmitting data from the communication instrument 1 to the information provider station 9.

### (4) Processing for changing the services contracted to by the user

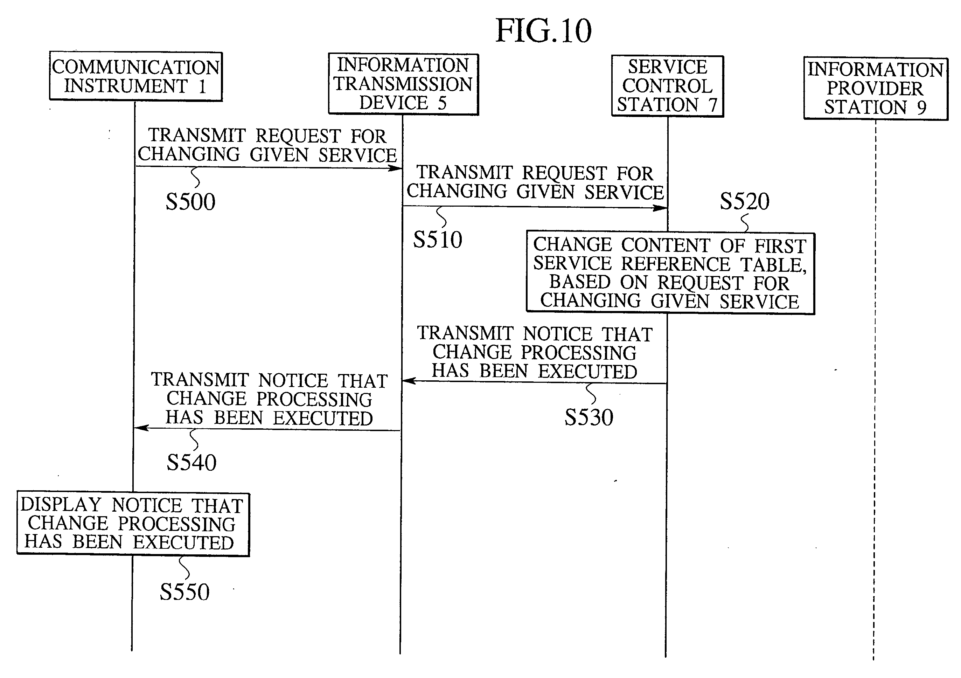

Fig. 10 is a sequence diagram which describes processing for the changing services contracted to by the user.

First, an assumption is made that the above-described processing in Section (2) has heen carried out. Then, the user acquires information indicating " the method of changing the given service " . Thereafter, the user inputs a request for changing the given service contracted to by the user , in accordance with the method of changing the given service, to the input unit of the communication instrument 1.

The communication instrument 1 transmits the request for the change and the sender number to the information transmission device 5 (step S500). The request for the change is "a request for deleting the given service from the services contracted to by the user", or "a request for adding the given service to the services contracted to by the user", for example.

In step S510, the information transmission device 5 transmits the request for changing the given service and the sender number to the service control station 7. A concrete explanations of the processing will be given below. The request for the change is transmitted to the control unit 54 through the communication unit 56. The control unit 54 transmits to the communication instrument 1, a request for verification information verifying that the user has officially completed a procedure for changing the given service. The procedure for changing the given service is "a procedure for the user to apply to change the given service with a given organization", for example.

The request for verification information is displayed on the display unit of the communication instrument 1. The user inputs the verification information to the input unit bused on the request. The verification information is transmitted to the control unit 54 of the information transmission device 5 through the control unit of the communication instrument 1.

Based on the transmitted verification information, the control unit 54 of the information transmission device 5 judges that "the user has officially completed a procedure for changing the given service". Then, the control unit 54 transmits the request for changing the given service and the user information to the service control station 7. Meanwhile, the control unit 54 converts the sender number into user information by use of the first user reference table.

In step S52U, the change unit 80 of the service control station 7 rewrites the content of the first service reference table stored in the service storage unit 72, based on the request for changing the given service. A concrete explanations of the processing will be given below.

The request for changing the given service and the user information are transmitted to the change unit 80, through the communication unit 77 and the control unit 76. The change unit 80 reads the first service reference table from the service storage unit 72. Based on the request for changing the given service, the change unit 80 changes the information concerning the given service contracted to by the user corresponding to the user information, from the information included in the first service reference table. The information concerning the given service may be information specitying the given information and/or information specifying detailed services, for example.

An assumption will be made herein that the " first service reference table " records information specifying a service T1, information specifying a service T2, and information specifying a service T3, collectively as services contracted to by a user W. Now, another assumption will be made that the " content of the request for changing the given service T1 " includes "a request for deleting the given service T1 and a request for adding a given service T4". In this case, the information specifying a plurality of detailed services corresponding to the given service T4 is also transmitted to the change unit 80.

The change unit 80 deletes the information concerning the given service T1 corresponding to the user W from the information recorded on the first service reference table. The description "delete the information concerning the given service T1" is equivalent to "delete the information specifying the given service T1 and the information specifying the plurality of detailed services corresponding to the given service T1".

Moreover, the change unit 80 adds the information concerning the given service T4 to the information (information concerning the services corresponding to the user W) which are recorded on the first service reference table. The description "add the information concerning the given service T4" is equivalent to "add the information specifying the given service T4 and the information specifying the plurality of detailed services corresponding to the given service T4".

On the other hand, an assumption will be made that the user W has contracted to a detailed service T11, a detailed service T12, and a detailed service T13 ,from among the plurality of detailed services corresponding to the service T1. In this case, the first service reference table records information specifying the detailed service T11, information specifying the detailed service T12, and information specifying the detailed service T13, collectively as the detailed services corresponding to the service T1 contracted to by user W. In addition, another assumption will be made that the request for the change includes "a request for deleting the detailed service T11 and a request for adding a detailed service T14".

The change unit 80 deletes the information specifying the detailed service T11 corresponding to the user W from the information recorded on the first service reference table. Moreover, the change unit 80 adds the information specifying the detailed service T14 to the information concerning the services corresponding to the user W which are recorded on the first service reference table.

Here, the request for the change includes the service identifier of the service to be changed. Moreover, information specifying each service and information specifying each detailed service is recorded on the first service reference table. The service identifies is given to information specifying each service respectively. Moreover, the detailed service identifies is given to the information specifying each detailed service respectively. The change unit 80 can judge the information specifying the service to be changed, or the information specifying the detailed service to be changed, based on searching the service identities or the detailed service identifies.

In step S530, the control unit 76 of the service control station 7 transmits a notice that change processing has been executed and the user information to the information transmission device 5 through the communication unit 77. In this case, information specifying the changed service (such as a service name ) and information specifying the changed detailed service (such as a detailed service name) is also transmitted to the information transmission device 5. Alternatively, the service identifier may be transmitted to the information transmission device 5 instead of the service name.

In step S540, the information transmission device 5 transmits the notice that change processing has been executed to the communication instrument 1 of the user. A concrete explanations of the processing will be given below. The notice and the user information are transmitted to the control unit 54 of the information transmission device 5. The control unit 54 selects the communication instrument 1 corresponding to the user specified in the user information, based on the first user reference table. Then the control unit 54 transmits the notice to the relevant communication instrument 1. In this case, information specifying the changed service and information specifying the changed detailed service is also transmitted to the communication instrument 1. In this case, information specifying the changed services may be transmitted to the communication instrument 1. Information specifying the changed detailed services may lie also transmitted to the communication instrument 1.

In step S550, the display unit of the communication instrument 1 displays the notice, the information specifying the changed services and the information for specifying the changed detailed services.

For example, a notice indicating " deletion of information specifying the service T1 corresponding to the user X " and a notice indicating " addition of information specifying the service T4 corresponding to the user X " are displayed on the display unit of the communication instrument 1.

### (Operations and effects)

In this embodiment, the communication unit 77 receives information specifying a user, and the request for the given services contracted to by the user from the communication instrument 1 of the user. Meanwhile, the use status administrator unit 73 administers the use status, which means an information showing how each detailed service is used by each user. Moreover, the service decision unit 75 selects a given detailed service from the plurality of detailed services corresponding to the given service, based on the first service reference table and the use status administered by the use status administrator unit 73. Furthermore, the communication unit (the provider unit) 95 provides the communication instrument 1 of the user with the given detailed service information describing the content of the given detailed service.

For this reason, the detailed service sought by the user is selectd in consideration of the use status corresponding to the user. As a consequence, the detailed service information sought by the user is transmitted to the communication instrument 1 of the user.

Meanwhile, the service decision unit 75 can also determine the attribute information of the user with reference to the information specifying the user and the " attribute information reference table " . Moreover, the service decision unit 75 can also refer to the second service reference table and thereby select the given detailed service based on the request for the given service and attribute information.

For this reason, the detailed service sought by the user is selectd in consideration of the attribute information of the user. As a consequence, the detailed service information sought by the user is transmitted to the communication instrument 1 of the user.

Moreover, in this embodiment, the communication unit 77 receives the request for information which shows how a given service contracted to by the user is used by the user. Then, the service decision unit 75 selects the plurality of detailed services corresponding to the given service with reference to the first service reference table. Meanwhile, the sort unit 78 acquires the use frequencies corresponding to " the user and the plurality of detailed services " from among all the use frequencies maintained by the use frequency maintenance unit 73b. Moreover, the sort unit 78 sorts the plurality of detailed services corresponding to the acquired use frequencies in order of high use frequencies. Furthermore, the sort unit 78 generates " sorting information " which indicates information specifying detailed services thus sorted. The generated sorting information is transmitted to the communication instrument 1 of the user. The display unit of the communication instrument 1 displays the sorting information.

For this reason, based on the displayed sorting information, the user can recognize which detailed services are frequently used and which detailed services are not frequently used from among the plurality of detailed services corresponding to the given services contracted to by the user.

Moreover, The user can select one or more desired detailed services from among the plurality of detailed services which are displayed, bused on the sorting information.

Moreover, in this embodiment, the communication unit (the receiver unit) 77 receives the instruction to transmit information specifying the services contracted to by the user and information specifying the detailed services corresponding to the service. Then, the acquisition unit 79 refers to the first service reference table and thereby acquires information specifying the service and information specifying the detailed services. Thereafter, the communication unit (the transmitter unit) 77 transmits information specifying the service acquired by the acquisition unit 79 and information specifying the detailed services to the communication instrument 1.

For this reason, even if the user forgets which services or the detailed services corresponding to the services they have contracted to, the user can obtain information specitying the services contracted to by the user and/or information specifying the detailed services corresponding to the services, easily and promptly.

Furthermore, in this embodiment, the using method storage unit 92 (or the changing method storage unit 93) stores information indicating the methods of using (or the methods of changing) the service. The communication unit 95 receives requests for information indicating the method of using (or the method of changing) the given service contracted to by the user. The using method acquisition unit 94a (or the changing method acquisition unit 94b) acquires information indicating the method of using (or the method of changing) the given service ,from the using method storage unit 92 (or the changing method storage unit 93). Thereafter, the communication unit (the provider unit) 95 transmits information indicating the method of using (or the method of chunging) the given service, to the communication instrument 1 of the user. Furthermore, the display unit of the communication instrument 1 can display information indicating the method of using (or the method of changing) the given service, for example.

Conventionally, information indicating the method of using the service and information indicating the method of changing the service has been described mainly in brochures or manuals. Accordingly, the user would face the following problem when the user refers to the brochures or the manuals for the purpose of inputting a request for acquiring information concerning the service (such as service information or detailed service information). The user has to check the brochures or the manuals each time the user does an inputting operation. Therefore, the inputting operation becomes time-consuming. As a result, the user could not acquire information concerning the service promptly. In addition, when the user acquires information concerning the service by use of a mobile terminal device, the user would face the following problem conventionally. In such a case, the user would have to carry the brochures or the manuals when the user moves with the mobile terminal device.

Therefore, conventionally,the user has to refer to the brochures or the manuals if the user wishes to acquire the given service information or change information concerning the given service. For this reason, the user could not acquire the given service information easily and promptly. In addition, the user could not change information concerning the given service easily and promptly.

In this embodiment, when a user acquires information concerning the given service, the user need only perform an action required for acquiring the information concerning the given service, based on the information indicating " the method of using the given service " which is displayed on the communication instrument 1. Similarly, when the user changes the information concerning the given service, the user need only perform an action required to change the information concerning the given service, based on the information indicating " the method of changing the given service " which is displayed on the communication instrument 1.

Accordingly, when a user acquires information concerning the given service or changes the information concerning the given service, the user does not have to refer to brochures or manuals. As a result, the user can acquire information concerning the given service easily and promptly. In addition, the user can also change information concerning the given service easily and promptly.

Moreover, in this embodiment, the request for changing the given services contracted to by the user is inputted to the input unit of the communication instrument 1 in accordance with the method of changing the given service. Then, the communication unit 77 receives the request for changing the given service from the communication instrument 1. The change unit 80 changes the information concerning the given service contracted to by the user, from the information included in the first service reference table based on the request for changing the given service.

For this reason, when the request for changing the information concerning given service is inputted with the input unit, the change unit 80 changes the first service reference table based on the request. Accordingly, the user can easily and promptly perform addition or deletion of the services contracted to by the user.

For example, information indicating " the methods of using the respective services " and information specifying the services contracted to by the user has conventionally been held in the communication instrument 1. In addition, conventionally, it has not been easy for the user to change the information in the communication instrument 1. According to this embodiment, as mentioned previously, the user can easily and promptly perform the addition or deletion of the services to which the user is contracted.

Furthermore, in this embodiment, the information provider station 9 and the service control station 7 cooperate to provide the communication instrument 1 with information concerning the service. Meanwhile, the role of the information provider station 9 and the role of the service control station 7 are appropriately divided. Accordingly, the communication instrument 1 can acquire information concerning the service promptly.

### (Modified example)

### (Configuration of a service information providing system )

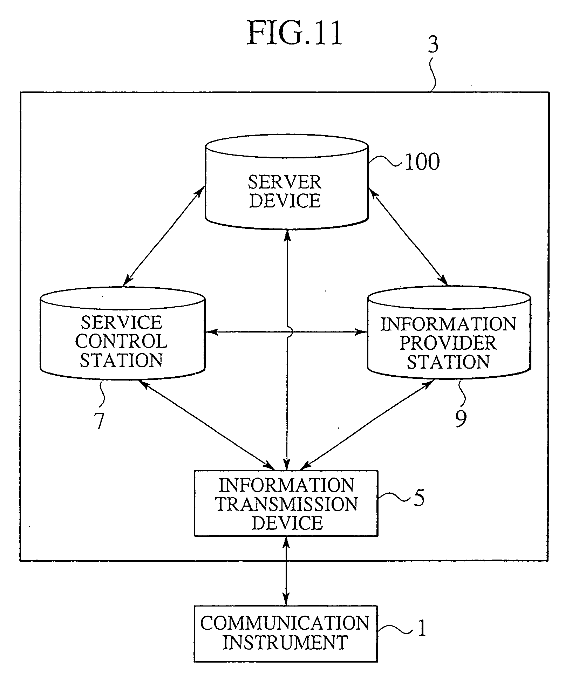

Fig. 11 is a diagram showing a configuration of a service information providing system of a modified example. In Fig. 11, the same reference numerals are assigned to the same constitutions and functions as those in Fig. 1, and description thereof will he omitted herein.

The system according to the modified example, includes a server device 100 which is connected to the communication line network 3. The server device 100 can perform data communication among each device (such as the service control station 7, the information transmission device 5, and the information provider station 9). For example, the server device 100 transmits and receives data to and from the information provider station 9, such as requests for changing the service information, requests for changing the information indicating " the method of using the service " , and details of changing the information concerning the service.

### (Service information providing method )

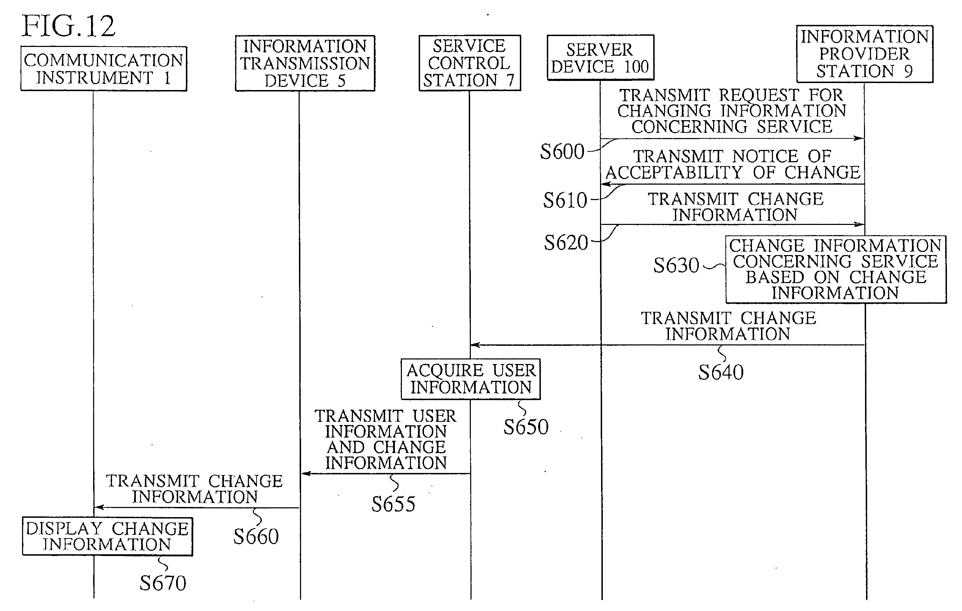

Fig. 12 is a sequence diagram showing processing to be performed in the system of the modified example in the case where information concerning the service is changed.

In the modified example, it there is a change in any of the content stored in " the service information storage unit 91 ", the content stored in " the using method storage unit 92 ", and the content stored in " the changing method storage unit 93 ", then such a change is transmitted to the communication instrument 1.

Firstly, in step S600, the server device 100 transmits the request for changing information concerning the service to the information provider station 9. The information concerning the service is service information or information indicating " the method of using the service ", for example.

In step S610, the request for the change is transmitted to the control unit 94 of the information provider station 9. The control unit 94 establishes a condition whereby the control unit 94 can access respective storage units 91, 92 and 93. Then, the control unit 94 transmits to the server device 100 through the communication unit 95, a notice stating that " the change of the information concerning the service " is possible.

In step S620, the server device 100 transmits a change information for indicating " the content of the change in the information concerning the service " , to the information provider station 9.

In step S630, the change information is transmitted to the control unit 94 through the communication unit 95. The control unit 94 rewrites the content stored in each storage unit, based on the change information. For example, if the change information is information indicating " the change in the given service information ", the control unit 94 rewrites the content of the given service information which is stored in the service information storage unit 91, based on the change information.

In step S640, the control unit 94 transmits the change information, to the service control station 7 ,through the communication unit 95. In this case, information specifying " the service concerning the change " , for example, is also transmitted to the service control station 7.

In step S650, the control unit 76 of the service control station 7, reads the first service reference table, from the service storage unit 72. Then, the control unit 76 acquires a plurality of user information corresponding to the service concerning the the change

Then, in step S655, the control unit 76 transmits the change information and the user information to the information transmission device 5 through the communication unit 77.

In step S660, the information transmission device 5 transmits the change information to the communication instrument 1 corresponding to each user specified in the user information.

A concrete explanations of the processing will be given below. The control unit 54 of the information transmission device 5 reads the first user reference table, from the storage unit 52. Then, the control unit 54 refers to the first user reference table and selects the communication instrument 1 corresponding to each user specified in the user information. Thereafter, the control unit 54 transmits the change information, to the communication instrument 1.

In step S670, the change information is displayed on the display unit of each communication instrument 1. The display unit displays "information indicating " which part of the information included in the given service information has changed " ", for example.

In this modified example, if the information concerning the service administered by the information provider station 9 is changed irrespectively of the intention of the user, the change information indicating the content of the change is transmitted to the communication instrument easily and promptly. As a result, the user can react promptly, when the information concerning the service administered by the information provider station 9 changes.

Moreover, for example, information indicating " the methods of using the respective services " and the information specifying the services contracted to by the user has conventionally been maintained in the communication instrument 1. For this reason, conventionally, the information maintained in the communication instrument 1 has to be adjusted if the information concerning the service is changed. Such a adjustment operation was a complex task for the user. In addition, such a adjustment operation might alter the original settings of the communication instrument 1.

According to the modified example, the change of an information concerning the service is performed by adjusting the content stored in the respective storage units 91, 92 and 93. Moreover, the information concerning the change is transmitted to the communication instrument 1. In this way, the user can obtain the information concerning the change. As a result, the user does not have to perform the above-mentioned complex operation.

In the embodiment or the modified example, the data communication may be performed in a circuit-switching system. Also, the data communication may be performed in a packet-switching system.

Moreover, the information concerning the service may include character information or sound information. In the latter case, the communication instrument 1 must include a sound output unit in addition to the display unit.

Various moditications will become possible for those skilled in the art after receiving the teachings of the present disclosure without departing from the scope thereof.

## Claims

1. A service information providing system for providing information concerning a service to communication instruments used by users of a communication network, through the communication network, the service information providing system comprising:
an attribute information storage unit configured to store an attribute information reference table in which information specifying each user and attribute information showing attributes of the user, correspond with each other;
a service storage unit configured to store a service reference table in which information specifying each service, information specifying detailed services showing content more detailed than content indicated by the service and the attribute information of user are associated with each other;
a receiver configured to receive information specifying the user corresponding to the communication instrument and a request for a given services contracted to by the user;
an service decision unit configured to determine the attribute information of the user, by referring to information specifying the user received by the receiver and the attribute information reference table, and to select a given detailed service based on the attribute information of the user and the request for the given service ,by referring to the service reference table; and
a provider unit configured to provide the communication instrument of the user with detailed service information describing the content of the given detailed service selectd by the service decision unit.

2. A service information providing system for providing information concerning a service to communication instruments used by users of a communication network, through the communication network, the service information providing system comprising:
a service storage unit configured to store a service reference table in which information specifying services contracted to by each user and information specifying a plurality of detailed services showing content more detailed than the content indicated by the service, correspond with each other;
a first receiver configured to receive information specifying the user corresponding to the communication instrument and requests for a given service contracted to by the user;
an use status administrator configured to administer use status which shows how each detailed service is used by each user;
an service decision unit configured to select a given detailed service from a plurality of detailed services corresponding to the given service, based on the service reference table and the use status administered by the use status administrator, when information specifying the user corresponding to the communication instrument and requests for the given service are received by the first receiver; and
a provider unit configured to provide the communication instrument of the user with detailed service information describing the content of the given detailed service selectd by the service decision unit.

3. The service information providing system according to claim 2,
wherein the use status administrator includes a use frequency counter configured to count a use frequency, which indicates the number of times that each user uses detailed service, for each user and for each detailed service , and
the service decision unit refers to the service reference table and selects the plurality of detailed services corresponding to the given service, when information specifying the user corresponding to the communication instrument and requests for the given services contracted to by the user are received by the first receiver, then acquires the use frequencies corresponding to the user and corresponding to the plurality of detailed services ,from among all the use frequencies counted by the use frequency counter, and then selects the given detailed service from the plurality of detailed services based on the acquired use frequencies.

4. The service information providing system according to claim 3,
wherein the first receiver receives from the communication instrument, a request for information which shows how the given services contracted to by the user is used by the user,
the service decision unit refers to the service reference table and selects the plurality of detailed services corresponding to the given service, and
the service information providing system includes:
a sorter unit configured to acquire the use frequencies corresponding to the user and corresponding to the plurality of detailed services, from among all the use frequencies counted by the use frequency counter, and to sort the detailed services corresponding to the acquired use frequencies, in order of high use frequencies;
a first transmitter configured to transmit sorting information which indicates information specifying the detailed services sorted by the sorter unit; and
a display unit configured to display the sorting information transmitted by the first transmitter in the communication instrument.

5. The service information providing system according to claim 2,
wherein the first receiver includes:
un acquisition unit configured to acquire information specifying a services contracted to by the user and information specifying detailed services corresponding to the service, by referring to the service reference table, when the first receiver receives an instruction to transmit information specifying the service and information specifying the detailed service from the communication instrument; and
a second transmitter configured to transmit to the communication instrument information specifying the service and information specifying detailed services acquired by the acquisition unit.

6. The service information providing system according to claim 2, further comprising:
a using method storage unit configured to store information indicating methods of using respective services;
a second receiver configured to receive from the communication instrument, a request for information indicating a method of using the given services contracted to by the user corresponding to the communication instrument; and
a using method acquisition unit configured to acquire information indicating the method ot using the given service from the using method storage unit,
wherein the provider unit provides the communication instrument with information indicating the method of using the given service acquired by the using method acquisition unit.

7. The service information providing system according to claim 2, further comprising:
a changing method storage unit configured to store information indicating methods of changing respective services;
a second receiver configured to receive from the communication instrument ,a request for information indicating a method of changing the given services contracted to by the user corresponding to the communication instrument; and
a changing method acquisition unit configured to acquire information indicating the method of changing the given service from the changing method storage unit,
wherein the provider unit provides the communication instrument with information indicating the method of changing the given service acquired by the changing method acquisition unit.

8. The service information providing system according to claim 7, further comprising:
an input unit configured to allow the user to input a request for changing the given services contracted to by the user, in accordance with the method of changing the given service;
a third receiver configured to receive the request for changing the given service from the communication instrument used by the user; and
a change unit configured to change information concerning the given services contracted to by the user, from among all the information included in the service reference table, based on the request for changing the given service.

9. A service information providing method for providing information concerning a service to communication instruments used by users of a communication network, through the communication network, the service information providing method comprising the steps of:
storing in an attribute information storage unit, an attribute information reference table, in which information specifying each user and attribute information showing attributes of the user, correspond with each other;
storing in a service storage unit, a service reference table in which information specifying each service, information specifying detailed services showing content more detailed than content indicated by the service and the attribute information of user are associated with each other;
receiving information specifying the user corresponding to the communication instrument and requests for a given services contracted to by the user;
determining the attribute information of the user, by referring to the received information specifying the user and the attribute information reference table;
selecting a given detailed service based on the attribute information of the user and the request for the given service by referring to the service reference table; and
providing the communication instrument of the user with detailed service information describing the content of the selected given detailed service.

10. A service information providing method for providing information concerning a service to communication instruments used by users of a communication network, through the communication network, the service information providing method comprising the steps of:
storing in a service storage unit, a service reference table, in which information specifying a services contracted to by each user and information specifying a plurality of detailed services showing content more detailed than the content indicated by the service correspond with each other ;
receiving information specifying the user corresponding to the communication instrument and requests for a given service contracted to by the user;
administering use status which shows how each detailed service is used by each user;
selecting a given detailed service from a plurality of detailed services corresponding to the given service, based on the service reference table and the use status administered by the use status administrator, when information specifying the user corresponding to the communication instrument and requests for the given service are received ; and
providing the communication instrument of the user with detailed service information describing the content of the given detailed service selectd.

11. The service information providing method according to claim 10,
wherein the administering step includes the step of counting a use frequency , which indicates the number of times that each user uses detailed service, for each user and for each detailed service , and
the selecting step includes the steps of;
refering to the service reference table and selecting the plurality of detailed services corresponding to the given service, when information specifying the user corresponding to the communication instrument ,and requests for the given services contracted to by the user, are received,
acquiring the use frequencies corresponding to the user and corresponding to the plurality of detailed services from among all the counted use frequencies; and
selecting the given detailed service from the plurality of detailed services based on the acquired use frequencies.

12. The service information providing method according to claim 11, further comprising the steps ot:
receiving from the communication instrument, a request for information which shows how the given services contracted to by the user is used by the user ;
referring to the service reference table and selecting the plurality of detailed services corresponding to the given service;
acquiring the use frequencies corresponding to the user and corresponding to the plurality of detailed services, from among all the use frequencies counted in the counting step;
sorting the detailed services corresponding to the acquired use frequencies, in order of high use frequencies;
transmitting sorting information which indicates information specifying the detailed services sorted ; and
displaying the transmitted sorting information in the communication instrument.

13. The service information providing method according to claim 10, further comprising the steps of:
receiving an instruction to transmit information specifying a service contracted to by the user and information specifying detailed services corresponding to the service from the communication instrument;
referring to the service reference table, and acquiring information specifying the service and information specifying the detailed services corresponding to the service; and
transmitting to the communication instrument information specifying the service and information specifying the detailed services acquired in the preceding step.

14. The service information providing method according to claim 10, further comprising the steps of:
storing information indicating methods of using respective services in a using method storage unit;
receiving from the communication instrument, a request for information indicating a method of using the given services contracted to by the user corresponding to the communication instrument;
acquiring information indicating the method of using the given service from the using method storage unit; and
providing the communication instrument with information indicating the method of using the given service acquired in the preceding step.

15. The service information providing method according to claim 10, further comprising the steps of:
storing information indicating methods of changing respective services in a changing method storage unit;
receiving from the communication instrument, a request for information indicating a method of changing the given services contracted to by the user corresponding to the communication instrument;
acquiring information indicating the method of changing the given service from the changing method storage unit; and
providing the communication instrument with information indicating the method of changing the given service acquired in the preceding step.

16. The service information providing method according to claim 15, further comprising the steps of:
allowing the user to input a request for changing the given services contracted to by the user, in accordance with the method of changing the given service;
receiving the request for changing the given service trom the communication instrument used by the user; and
changing information concerning the given services contracted to by the user, from among all the information included in the service reference table, based on the request for changing the given service.

17. A control station for transmitting an instruction to an information provider station holding information concerning a service, so as to provide a communication instrument of a user with the information, the control station comprising:
an attribute information storage unit configured to store an attribute information reference table in which information specifying each user and attribute information showing attributes of the user, correspond with each other;
a service storage unit configured to store a service reference table in which information specifying each service, information specifying detailed services showing content more detailed than content indicated by the service and the attribute information of user are associated with each other;
a receiver configured to receive information specifying the user corresponding to the communication instrument and a request for a given services contracted to by the user;
an service decision unit configured to determine the attribute information of the user, by referring to information specifying the user received by the receiver and the attribute information reference table, and to select a given detailed service based on the attribute information of the user and the request for the given service ,by referring to the service reference table; and
a transmitter configured to transmit an instruction to the information provider station , so as to provide the communication instrument of the user with detailed service information describing content of the given detailed service selectd by the service decision unit.
